(19) Europäisches Patentamt
European Patent Office
Office européen des brevets

(11) EP 4 737 941 A1

(12) **EUROPEAN PATENT APPLICATION**

(43) Date of publication:
06.05.2026 Bulletin 2026/19

(21) Application number: 25209932.0

(22) Date of filing: 20.10.2025

(51) International Patent Classification (IPC):
G01S 7/41 (2006.01)     G01S 13/42 (2006.01)
G01S 13/931 (2020.01)

(52) Cooperative Patent Classification (CPC):
G01S 13/931; G01S 7/41; G01S 13/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.11.2024 US 202418934990

(71) Applicant: Aptiv Technologies AG
8200 Schaffhausen (CH)

(72) Inventors:
• ZHANG, Xin
Agoura Hills (US)
• LI, Zhengzheng
Agoura Hills (US)
• AGRAWAL, Piyush
Oak Park (US)
• ROGERS, Stuart
Oak Park (US)

(74) Representative: Lewis Silkin LLP
Arbor
255 Blackfriars Road
London SE1 9AX (GB)

(54) **MULTIPATH RADAR SIGNAL REFLECTION DETECTORS**

(57) A method includes receiving a set of radar signals incident on a set of objects. The method includes selecting a GLRT detector. The method includes determining a ratio between a maximized likelihood function of a second hypothesis model and a maximized likelihood function of a first hypothesis model. The method includes determining whether a set of angles associated with the set of radar signals is available. The method includes, in response to a determination that the set of angles is available, updating a set of data associated with a set of objects. The method includes, in response to a determination that the set of angles is not available, selecting an angle estimation method, estimating the set of angles, and tracking the set of objects.

Radar System
112 — 108

Radar System 108

Antenna Array 136

Transceiver 140

Processor Hardware 144

Memory Hardware 148

Radar Software 152

**FIG. 1**

EP 4 737 941 A1

**Description**

FIELD

The present disclosure relates to radar signal processing and more particularly to detecting bistatic reflections and estimating angles based on processing of received radar signals (USPC Class 342).

BACKGROUND

In automotive applications, radar is frequently employed to detect obstacles such as other vehicles or other hazards. In some scenarios and environments, the transmitted radar signals reflect back directly to the host radar (direct-path signals) after hitting a first object and in others, the signal returns to the host radar after reflecting a first object and then a second object (multi-path signals). Since the environment illuminated by automotive radar is often crowded, multi-path reflections could be the majority in some cases, and the most challenging type is called a "bistatic" reflection which affects how to estimate the angles after range-Doppler processing. Conventional angle estimation approaches assume that the reflections are direct-path, which creates large angle estimation errors when the model mismatches. Special angle estimators may be required when multi-path reflections occur. Bistatic reflections also affect how object tracking systems deal with range-velocity-angle detections. Tracking algorithms frequently assume that reflections are direct-path, and the detections with bistatic reflections are usually discarded. Therefore, determining whether a range-Doppler detection contains multi-path energy becomes critical to the whole system.

By definition, the direction of arrival (DOA) is not equal to the direction of departure (DOD) for a bistatic signal, therefore the detection of bistatic reflection must be done in the spatial (or angle) domain after range-Doppler processing. Some bistatic detectors apply linear prediction (LP) theory to a synthetic uniform linear array (ULA). The LP error is close to the noise power when there are no bistatic reflections, and the LP error becomes larger when bistatic reflections exist. Comparing the LP error with a threshold indicates whether a signal is multi-path. Other methods use angle unfolding schemes (such as direct-matching and cross-matching) to detect bistatic reflections by testing the angle unfolding matching errors between the DOA and DOD. When using such schemes, a bistatic reflection exists if the direct-matching error is large and the cross-matching error is less than the direct-matching error. A third method uses a joint DOD-DOA estimation approach. Multi-path detection is conducted for each reflection path by comparing the angle unfolding matching error between the associated DOD and DOA.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A method includes receiving a set of radar signals incident on a set of objects. The method includes determining a first hypothesis model that represents a monostatic signal model of the set of radar signals. The method includes determining a second hypothesis model that represents a bistatic signal model of the set of radar signals. The method includes selecting, from a set of generalized likelihood ratio test (GLRT) detectors, a selected GLRT detector based on a set of signal criteria. The method includes, based on the selected GLRT detector, determining a ratio between a maximized likelihood function of the second hypothesis model and a maximized likelihood function of the first hypothesis model. The method includes determining whether the ratio is greater than a threshold. The method includes determining whether a set of angles associated with the set of radar signals is available. The method includes, in response to a determination that the set of angles is available, updating a set of data associated with a set of objects. The method includes, in response to a determination that the set of angles is not available, selecting an angle estimation method based on the ratio. The method includes estimating the set of angles using the selected angle estimation method. The method includes tracking the set of objects based on the set of angles.

In other features, the method includes, in response to a determination that the ratio is greater than a threshold, determining that the second hypothesis model is accurate. In other features, the method includes, in response to a determination that the ratio is less than or equal to the threshold, determining that the first hypothesis model is accurate. In other features, the method includes autonomously controlling a vehicle to avoid the set of objects.

In other features, selecting the angle estimation method includes, in response to a determination that the ratio is greater than the threshold, selecting a first angle estimation method. In other features, selecting the angle estimation method includes, in response to a determination that the ratio is less than the threshold, selecting a second angle estimation method.

In other features, the set of GLRT detectors is derived from:

$$\mathcal{L} = \frac{\max\limits_{\theta,S,\eta} p_1(Y|\theta,S,\eta)}{\max\limits_{\theta,S,\eta} p_0(Y|\theta,S,\eta)} \overset{\mathcal{H}_1}{\underset{\mathcal{H}_0}{\gtrless}} \gamma.$$

In other features, the set of GLRT detectors includes a first GLRT detector defined as:

$$\mathcal{L} = \frac{\min\limits_{\theta}\left\|P_A^{\perp}(\theta)Y\right\|_F^2}{\min\limits_{\theta}\left\|P_B^{\perp}(\theta)Y\right\|_F^2}.$$

In other features, the set of GLRT detectors includes a second GLRT detector defined as:

$$\mathcal{L}' = \max_{\theta}\left\|P_B(\theta)Y\right\|_F^2 - \max_{\theta}\left\|P_A(\theta)Y\right\|_F^2 .$$

In other features, the set of GLRT detectors includes a third GLRT detector defined as:

$$\mathcal{L}'' = \left\|P_B(\theta)Y\right\|_F^2 - \left\|P_A(\theta)Y\right\|_F^2.$$

In other features, the set of GLRT detectors includes a fourth GLRT detector defined as:

$$\mathcal{L}''' = \frac{\left\|P_A^{\perp}(\theta)Y\right\|_F^2}{\left\|P_B^{\perp}(\theta)Y\right\|_F^2}.$$

In other features, the first hypothesis model ($\mathcal{H}_0$) is defined as: $Y = A(\theta)S + W$. In other features, the second hypothesis model ($\mathcal{H}_1$) is defined as: $Y = B(\theta)S + W$. In other features, $Y \in \mathbb{C}^{N \times M}$ is a set of array observations. In other features, $A(\theta) \in \mathbb{C}^{N \times K}$ is a first spatial matrix of reflection paths. In other features, $B(\theta) \in \mathbb{C}^{N \times K}$ is a second spatial matrix of reflection paths. In other features, $S \in \mathbb{C}^{K \times M}$ is a set of transmitted signals. In other features, $W \in \mathbb{C}^{N \times M}$ is a set of noise data. In other features, $\theta$ is a set of angle data that includes $K$ quantity of elements. In other features, $N$ is a quantity of radar elements. In other features, $K$ is a quantity of reflection paths. In other features, $M$ is a quantity of observations. In other features, $\eta$ is a power level associated with the set of noise data. In other features, $\gamma$ is a threshold value. In other features, $p_1$ is a likelihood function under the second hypothesis model. In other features, $p_0$ is a likelihood function under the first hypothesis model. In other features, $\|\cdot\|_F$ represents a Frobenius norm. In other features, $P_A$ is a first projection matrix that maps vectors into their projections on to a subspace formed by $A$, where $P_A(\theta) = A(\theta)(A(\theta)^H A(\theta))^{-1}A(\theta)^H$. In other features, $P_B$ is a second projection matrix that maps vectors into their projections on to a subspace formed by $B$, where $P_B(\theta) = B(\theta)(B(\theta)^H B(\theta))^{-1}B(\theta)^H$. In other features, $P_B^{\perp}(\theta)$ is defined as $P_B^{\perp}(\theta) = I - P_B(\theta)$. In other features, $P_A^{\perp}(\theta)$ is defined as $P_A^{\perp}(\theta) = I - P_A(\theta)$, where $I$ is an identity matrix.

In other features, the method includes determining a probability that the second hypothesis model is correct. The probability is defined as:

$$\lambda_B = \frac{\max\limits_{\theta}\left\|P_B(\theta)Y\right\|_F^2}{\max\limits_{\theta}\left\|P_B(\theta)Y\right\|_F^2 + \max\limits_{\theta}\left\|P_A(\theta)Y\right\|_F^2}.$$

In other features, the method includes determining a probability that the first hypothesis model is correct. The probability is defined as:

$$\lambda_A = \frac{\max_{\theta}\|P_A(\theta)Y\|_F^2}{\max_{\theta}\|P_B(\theta)Y\|_F^2 + \max_{\theta}\|P_A(\theta)Y\|_F^2}.$$

In other features, the first hypothesis model is based on a quantity of elements in a radar array that receives the set of radar signals. In other features, the first hypothesis model is based on a first quantity of reflection paths. In other features, the first hypothesis model is based on a first quantity of observations. In other features, the first hypothesis model is based on the set of array observations, the first spatial matrix of reflection paths, the set of transmitted signals, and the set of noise data.

In other features, the second hypothesis model is based on the quantity of elements in a radar array that receives the set of radar signals. In other features, the second hypothesis model is based on a second quantity of reflection paths. In other features, the second hypothesis model is based on a second quantity of observations. In other features, the second hypothesis model is based on the set of array observations. In other features, the second hypothesis model is based on the second spatial matrix of reflection paths. In other features, the second hypothesis model is based on the set of transmitted signals. In other features, the second hypothesis model is based on the set of noise data.

In other features, the set of signal criteria includes a first criterion that is met when a power level associated with a set of noise data is known, and a second criterion that is met when a set of angles associated with a spatial matrix of reflection paths is known. In other features, the set of angles includes a direction of departure and a direction of arrival.

In other features, the method includes, before determining whether the ratio is greater than the threshold, estimating the set of angles. In other features, the method includes based on the ratio, identify a set of objects associated with bistatic reflections.

In other features, the selected angle estimation method is applicable to direct-path reflections and multi-path reflections, and the selected GLRT detector is the third GLRT detector or the fourth GLRT detector.

A system includes memory hardware configured to store instructions and processor hardware configured to execute the instructions. The instructions include receiving a set of radar signals incident on a set of objects. The instructions include determining a first hypothesis model that represents a monostatic signal model of the set of radar signals. The instructions include determining a second hypothesis model that represents a bistatic signal model of the set of radar signals. The instructions include selecting, from a set of generalized likelihood ratio test (GLRT) detectors, a selected GLRT detector based on a set of signal criteria. The instructions include, based on the selected GLRT detector, determining a ratio between a maximized likelihood function of the second hypothesis model and a maximized likelihood function of the first hypothesis model. The instructions include determining whether the ratio is greater than a threshold. The instructions include determining whether a set of angles associated with the set of radar signals is available. The instructions include, in response to a determination that the set of angles is available, updating a set of data associated with a set of objects. The instructions include, in response to a determination that the set of angles is not available, selecting an angle estimation method based on the ratio. The instructions include estimating the set of angles using the selected angle estimation method. The instructions include tracking the set of objects based on the set of angles.

In other features, the instructions include, in response to a determination that the ratio is greater than a threshold, determining that the second hypothesis model is accurate. In other features, the instructions includes, in response to a determination that the ratio is less than or equal to the threshold, determining that the first hypothesis model is accurate.

In other features, selecting the angle estimation method includes, in response to a determination that the ratio is greater than the threshold, selecting a first angle estimation method. In other features, selecting the angle estimation method includes, in response to a determination that the ratio is less than the threshold, selecting a second angle estimation method.

In other features, the set of GLRT detectors is derived from:

$$\mathcal{L} = \frac{\max_{\theta,S,\eta} p_1(Y|\theta,S,\eta)}{\max_{\theta,S,\eta} p_0(Y|\theta,S,\eta)} \overset{\mathcal{H}_1}{\underset{\mathcal{H}_0}{\gtrless}} \gamma.$$

In other features, the set of GLRT detectors includes a first GLRT detector defined as:

$$\mathcal{L} = \frac{\min_{\theta}\|P_A^{\perp}(\theta)Y\|_F^2}{\min_{\theta}\|P_B^{\perp}(\theta)Y\|_F^2}.$$

In other features, the set of GLRT detectors includes a second GLRT detector defined as:

$$\mathcal{L}' = \max_{\boldsymbol{\theta}} \|\boldsymbol{P}_B(\boldsymbol{\theta})\boldsymbol{Y}\|_F^2 - \max_{\boldsymbol{\theta}} \|\boldsymbol{P}_A(\boldsymbol{\theta})\boldsymbol{Y}\|_F^2 \, .$$

In other features, the set of GLRT detectors includes a third GLRT detector defined as:

$$\mathcal{L}'' = \|\boldsymbol{P}_B(\boldsymbol{\theta})\boldsymbol{Y}\|_F^2 - \|\boldsymbol{P}_A(\boldsymbol{\theta})\boldsymbol{Y}\|_F^2.$$

In other features, the set of GLRT detectors includes a fourth GLRT detector defined as:

$$\mathcal{L}''' = \frac{\left\|\boldsymbol{P}_A^{\perp}(\boldsymbol{\theta})\boldsymbol{Y}\right\|_F^2}{\left\|\boldsymbol{P}_B^{\perp}(\boldsymbol{\theta})\boldsymbol{Y}\right\|_F^2}.$$

In other features, the first hypothesis model ($\mathcal{H}_0$) is defined as: $\boldsymbol{Y} = \boldsymbol{A}(\theta)\boldsymbol{S} + \boldsymbol{W}$. In other features, the second hypothesis model ($\mathcal{H}_1$) is defined as: $Y = B(\theta)S + W$. In other features, $\boldsymbol{Y} \in \in \mathbb{C}^{N \times M}$ is a set of array observations. In other features, $\boldsymbol{A}(\boldsymbol{\theta}) \in \mathbb{C}^{N \times K}$ is a first spatial matrix of reflection paths. In other features, $\boldsymbol{B}(\boldsymbol{\theta}) \in \mathbb{C}^{N \times K}$ is a second spatial matrix of reflection paths. In other features, $\boldsymbol{S} \in \mathbb{C}^{K \times M}$ is a set of transmitted signals. In other features, $\boldsymbol{W} \in \mathbb{C}^{N \times M}$ is a set of noise data. In other features, $\theta$ is a set of angle data that includes $K$ quantity of elements. In other features, $N$ is a quantity of radar elements. In other features, $K$ is a quantity of reflection paths. In other features, M is a quantity of observations. In other features, $\eta$ is a power level associated with the set of noise data. In other features, y is a threshold value. In other features, $p_1$ is a likelihood function under the second hypothesis model. In other features, $p_0$ is a likelihood function under the first hypothesis model. In other features, $\|\cdot\|_F$ represents a Frobenius norm. In other features, $\boldsymbol{P}_A$ is a first projection matrix that maps vectors into their projections on to a subspace formed by $\boldsymbol{A}$, where $\boldsymbol{P}_A(\theta) = A(\theta)(A(\theta)^H A(\theta))^{-1} A(\theta)^H$. In other features, $\boldsymbol{P}_B$ is a second projection matrix that maps vectors into their projections on to a subspace formed by $\boldsymbol{B}$, where $\boldsymbol{P}_B(\theta) = B(\theta)(B(\theta)^H B(\theta))^{-1} B(\theta)^H$. In other features, $\boldsymbol{P}_B^{\perp}(\boldsymbol{\theta})$ is defined as $\boldsymbol{P}_B^{\perp}(\boldsymbol{\theta}) = \boldsymbol{I} - \boldsymbol{P}_B(\boldsymbol{\theta})$. In other features, $\boldsymbol{P}_A^{\perp}(\boldsymbol{\theta})$ is defined as $\boldsymbol{P}_A^{\perp}(\boldsymbol{\theta}) = \boldsymbol{I} - \boldsymbol{P}_A(\boldsymbol{\theta})$, where I is an identity matrix.

Further areas of applicability of the present disclosure will become apparent from the detailed description, the claims, and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a functional block diagram of an example radar system.

FIG. 2 is an example of monostatic and bistatic signals in an example scenario.

FIG. 3A is a block diagram of an example of a monostatic direct reflection path.

FIGS. 3B-3C are block diagrams of example bistatic reflection paths.

FIG. 3D is a block diagram of an example monostatic multipath reflection path.

FIG. 4 is a flowchart of an example method for determining whether a signal is monostatic or bistatic.

FIG. 5 is a flowchart of an example method for selecting a generalized likelihood ratio test (GLRT) detector.

FIG. 6 is a flowchart of an example method for determining whether a signal is monostatic or bistatic after angle estimation.

In the drawings, reference numbers may be reused to identify similar and/or identical elements.

DETAILED DESCRIPTION

INTRODUCTION

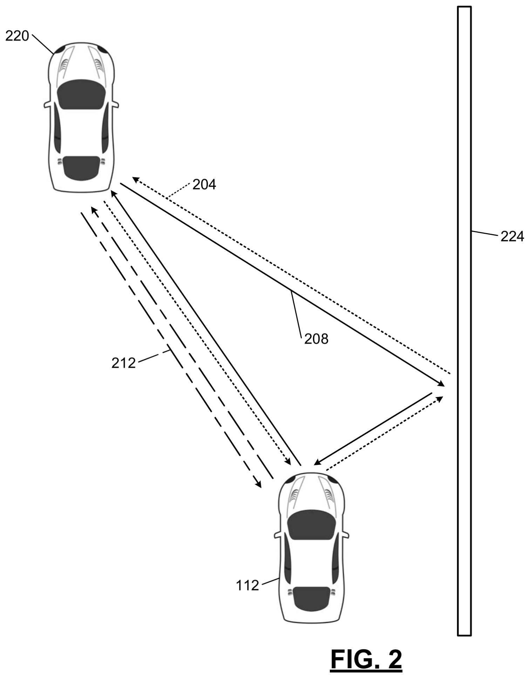

The present disclosure provides a method for determining whether a radar signal reflection is monostatic or bistatic. In the proposed method, a ratio between the maximized likelihood of a bistatic hypothesis and the maximized likelihood of a monostatic hypothesis is found using a generalized likelihood ratio test (GLRT) framework. The proposed detectors do not require special array design and can theoretically work for any combination of direct-path and multi-path reflections in the same range-Doppler bin. Since bistatic reflections with two reciprocal paths (like those shown by signal 204 and signal 208 in FIG. 2) are the most often seen cases, the GLRT detectors are derived based on this model. The GLRT detectors can also be extended to other multi-path models.

**EXAMPLE RADAR SYSTEM**

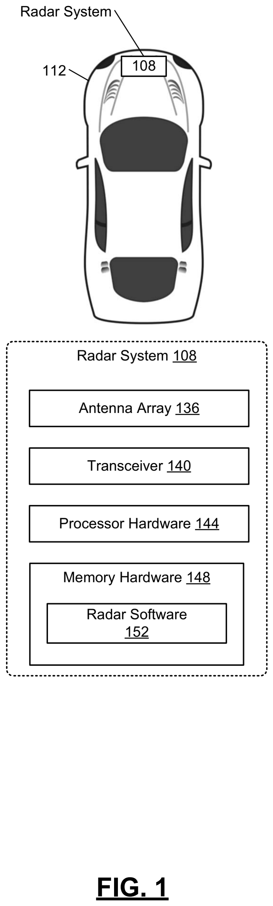

FIG. 1 is a high-level block diagram of radar system 108. Radar system 108 may be mounted to and/or integrated within vehicle 112. Radar system 108 is configured to detect one or more objects that are proximate to vehicle 112. In various implementations, radar system 108 may be a forward-looking radar system.

In various implementations, radar system 108 may be mounted to a top, underside, front side, rear side, left side, or right side of vehicle 112. In various implementations, radar system 108 includes multiple radar subsystems. For example, radar system 108 may include a first front-mounted radar subsystem positioned proximate a left side of vehicle 112 and a second front-mounted radar subsystem positioned proximate a right side of vehicle 112. In various implementations, location(s) of radar system 108 may be selected to provide a particular field of view that encompasses a region of interest in which one or more objects may be present. For example, a field of view may include a 360-degree field of view, one or more 180-degree fields of view, and/or one or more 90-degree fields of view.

In various implementations, vehicle 112 may include one or more systems that use data provided by radar system 108. For example, vehicle 112 may include a driver assistance system and/or an autonomous driving system. The driver assistance system may use data provided by radar system 108 to monitor one or more blind spots of vehicle 112 and/or alert a driver of vehicle 112 of a potential collision with an object. The autonomous driving system may use the data provided by radar system 108 to drive vehicle 112, avoid collisions with objects, perform emergency braking, change lanes, and/or adjust a speed of vehicle 112, among others.

In various implementations, radar system 108 may include at least one antenna array 136 and at least one transceiver 140. In various implementations, radar system 108 may include processor hardware 144 and memory hardware 148. The memory hardware 148 may include radar software 152. In various implementations, radar software 152 may be configured to analyze radar signals, detect one or more objects, and/or determine one or more characteristics (such as position and/or velocity) of the objects. In various implementations, radar software is fully or partially implemented in hardware.

MONOSTATIC AND BISTATIC REFLECTIONS

FIG. 2 is an example of monostatic and bistatic reflections. Vehicle 112 includes radar system 108. Radar system 108 produces monostatic signal 212 which reflects from target vehicle 220 directly to vehicle 112. Under different conditions, the signal may not reflect directly back to vehicle 112. As an example, multipath (in this case, bistatic) signal 204 reflects off reflective surface 224 to target vehicle 220 before returning to vehicle 112. As another example, signal 208 reflects off target vehicle 220 onto reflective surface 224 before returning to vehicle 112.

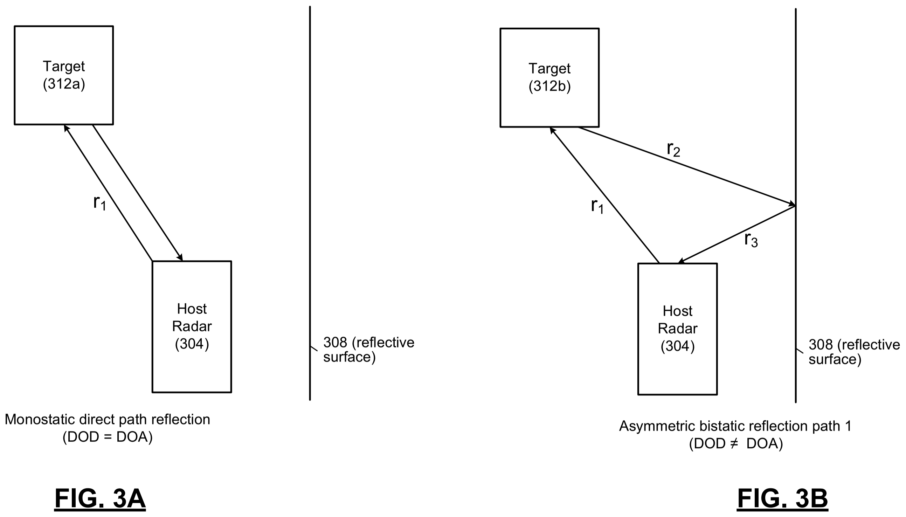

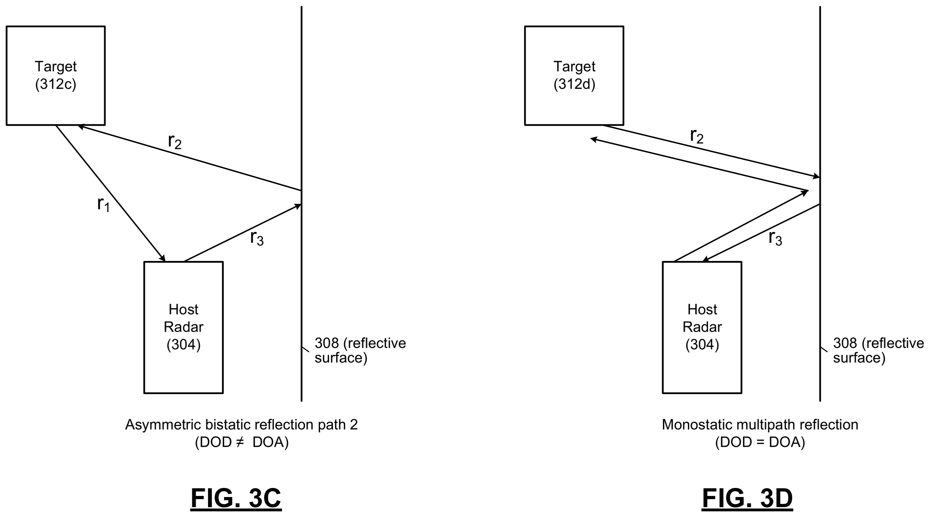

FIG. 3A is an example of a monostatic direct path reflection. In FIG. 3A, the DOD is equal to the DOA. Signal R1 leaves host radar 304, hits target 312a and reflects back directly to host radar 304 without reflecting off reflective surface 308. FIG. 3B is an example of an asymmetric bistatic reflection path (the DOD does not equal the DOA). Signal R1 leaves host radar 304, hits target 312b and is directed to reflective surface 308 before returning to host radar 304. FIG. 3C is a second example of an asymmetric bistatic reflection path (the DOD does not equal the DOA). Signal R3 leaves host radar 304, hits reflective surface 308 and is directed to target 312c before returning to host radar 304. FIG. 3D is an example of monostatic multipath reflection (DOD equals DOA, but the reflection is not direct). The radar signal reflects off reflective surface 308 toward target 312d. The signal then reflects off target 312d toward reflective surface 308 before returning to host radar 304.

THE FIRST GLRT DETECTOR

The signal model for bistatic reflections can be written as $Y = B(\theta)S + W$, where $Y \in \mathbb{C}^{N \times M}$ is the array observations, $B(\theta) \in \mathbb{C}^{N \times K}$ is the spatial matrix of reflection paths with unknown $\theta$, $S \in \mathbb{C}^{K \times M}$ is the unknown transmitted signals, and $W \in \mathbb{C}^{N \times M}$ is the spatially and temporally white Gaussian noise with zero mean and unknown power $\eta$.

The number of elements of a multiple-input multiple-output (MIMO) synthetic array is denoted as $N$, the number of observation snapshots is M, and the number of reflection paths is $K$ (the number of targets is equal to the number of reflection paths when only direct-path reflections exist). As an example, $K = 2$ and $\theta = [\theta_1, \theta_2]^T$. As shown in FIG. 2, signal 204 has its DOD as $\theta_1$ and DOA as $\theta_2$, while signal 208 has its DOD as $\theta_2$ and DOA as $\theta_1$. The spatial matrix is the subspace spanned by the steering vectors of the two reciprocal bistatic paths: $B(\theta) = [a(\theta_1, \theta_2), a(\theta_2, \theta_1)]$, where the signal 204 steering vector $a(\theta_1, \theta_2) = a_t(\theta_1) \otimes a_r(\theta_2)$, the signal 208 steering vector $a(\theta_2, \theta_1) = a_t(\theta_2) \circledR a_t(\theta_1)$, $a_t(\cdot)$ and $a_r(\cdot)$ stand for transmitter and receiver subarray manifolds, respectively, and $\otimes$ stands for the Kronecker product operation.

Based on the above notations, the signal model counterpart with direct-path reflections can be written as $Y = A(\theta)S + W$, where $A(\theta) = [a(\theta_1, \theta_1), a(\theta_2, \theta_2)]$. Therefore, a binary hypothesis test can be formulated as

$$\begin{cases} \mathcal{H}_1 : Y = B(\theta)S + W, \\ \mathcal{H}_0 : Y = A(\theta)S + W. \end{cases}$$

The GLRT is then given by

$$\mathcal{L} = \frac{\max\limits_{\theta, S, \eta} p_1(Y | \theta, S, \eta)}{\max\limits_{\theta, S, \eta} p_0(Y | \theta, S, \eta)} \underset{\mathcal{H}_0}{\overset{\mathcal{H}_1}{\gtrless}} \gamma$$

where $p_1(Y|\theta, S, \eta)$ and $p_0(Y|\theta, S, \eta)$ are the likelihood functions under $\mathcal{H}_1$ and $\mathcal{H}_0$, respectively, and $\gamma$ is the threshold. Specifically,

$$p_1(Y | \theta, S, \eta) = \frac{1}{(\pi\eta)^{NM}} \exp\left\{ -\frac{1}{\eta} \|Y - B(\theta)S\|_F^2 \right\},$$

and

$$p_0(Y | \theta, S, \eta) = \frac{1}{(\pi\eta)^{NM}} \exp\left\{ -\frac{1}{\eta} \|Y - A(\theta)S\|_F^2 \right\}.$$

In some implementations, the unknown angles and/or unknown noise power is estimated in advance so that the unknown angles and/or unknown noise power can be excluded from the list of unknown variables. Denoting the maximum likelihood estimation (MLE) results of the unknowns as $\{\hat{\theta}, \hat{S}, \hat{\eta}\}$, the test statistic can be further written as

$$\mathcal{L} = \frac{\max\limits_{\eta} p_1(Y | \hat{\theta}, \hat{S}, \eta)}{\max\limits_{\eta} p_0(Y | \hat{\theta}, \hat{S}, \eta)} = \frac{\max\limits_{\eta} \frac{1}{(\pi\eta)^{NM}} \exp\left\{ -\frac{\Delta_1}{\eta} \right\}}{\max\limits_{\eta} \frac{1}{(\pi\eta)^{NM}} \exp\left\{ -\frac{\Delta_0}{\eta} \right\}}$$

where

$$\Delta_1 = \min_{\theta, S} \|Y - B(\theta)S\|_F^2 = \min_{\theta} \left\| Y - B(\theta)\left(B(\theta)^H B(\theta)\right)^{-1} B(\theta)^H Y \right\|_F^2 = \min_{\theta} \|P_B^{\perp}(\theta)Y\|_F^2,$$

and

$$\Delta_0 = \min_{\boldsymbol{\theta},\boldsymbol{S}}\|\boldsymbol{Y} - \boldsymbol{A}(\boldsymbol{\theta})\boldsymbol{S}\|_F^2 = \min_{\boldsymbol{\theta}} \left\|\boldsymbol{Y} - \boldsymbol{A}(\boldsymbol{\theta})\left(\boldsymbol{A}(\boldsymbol{\theta})^H\boldsymbol{A}(\boldsymbol{\theta})\right)^{-1}\boldsymbol{A}(\boldsymbol{\theta})^H\boldsymbol{Y}\right\|_F^2 = \min_{\boldsymbol{\theta}}\|\boldsymbol{P}_A^\perp(\boldsymbol{\theta})\boldsymbol{Y}\|_F^2.$$

In the above equations, $H$ represents the Hermitian operator and $\|\cdot\|_F$ represents a Frobenius norm. The above two MLE problems with respect to the unknown angles can be solved via non-linear least squares (NLS) methods. Taking the first derivatives of the likelihood functions with respect to $\eta$ and setting the functions equal to zero results in $\widehat{\eta_1} = \frac{\Delta_1}{MN}$ under $\mathcal{H}_1$ and $\widehat{\eta_0} = \frac{\Delta_0}{MN}$ under $\mathcal{H}_0$. When combined with the test statistic the first GLRT detector is given by:

$$\mathcal{L} = \frac{p_1(\boldsymbol{Y}|\widehat{\boldsymbol{\theta}},\widehat{\boldsymbol{S}},\widehat{\eta})}{p_0(\boldsymbol{Y}|\widehat{\boldsymbol{\theta}},\widehat{\boldsymbol{S}},\widehat{\eta})} = \frac{\frac{1}{(\pi\widehat{\eta_1})^{NM}}}{\frac{1}{(\pi\widehat{\eta_0})^{NM}}} = \left(\frac{\widehat{\eta_0}}{\widehat{\eta_1}}\right)^{MN}.$$

Consequently, the first GLRT detector can be interpreted as comparing the estimated noise power between two hypotheses. When the noise power estimated under $\mathcal{H}_0$ is much larger, $\mathcal{H}_1$ is likely true. Results are more accurate if noise power estimates represented by $\Delta_0$ and $\Delta_1$ are used (such as $\mathcal{L} = \left(\frac{\Delta_0}{\Delta_1}\right)^{MN}$ or $\mathcal{L} = \frac{\Delta_0}{\Delta_1}$). If the minimum residual after projecting observations onto direct-path subspace is much larger than the minimum residual after projecting observations onto bistatic path subspace, that means the bistatic reflection model can fit the observations better and $\mathcal{H}_1$ is likely true.

THE SECOND GLRT DETECTOR

In some cases, the noise power $\eta$ may be known a priori through some estimation procedures in the range-Doppler processing stage, which leads to the second GLRT detector:

$$\mathcal{L}' = \frac{\max_{\boldsymbol{\theta},\boldsymbol{S}} p_1(\boldsymbol{Y}|\boldsymbol{\theta},\boldsymbol{S})}{\max_{\boldsymbol{\theta},\boldsymbol{S}} p_0(\boldsymbol{Y}|\boldsymbol{\theta},\boldsymbol{S})} = \frac{\exp\left\{-\frac{\Delta_1}{\eta}\right\}}{\exp\left\{-\frac{\Delta_0}{\eta}\right\}} = \exp\left\{\frac{\Delta_0-\Delta_1}{\eta}\right\} \underset{\mathcal{H}_0}{\overset{\mathcal{H}_1}{\gtrless}} \gamma'.$$

With a little abuse of the notations, the second GLRT detector can be simplified as

$$\mathcal{L}' = \Delta_0 - \Delta_1 = \max_{\boldsymbol{\theta}}\|\boldsymbol{P}_B(\boldsymbol{\theta})\boldsymbol{Y}\|_F^2 - \max_{\boldsymbol{\theta}}\|\boldsymbol{P}_A(\boldsymbol{\theta})\boldsymbol{Y}\|_F^2$$

where

$$\boldsymbol{P}_B(\boldsymbol{\theta}) = \boldsymbol{B}(\boldsymbol{\theta})\left(\boldsymbol{B}(\boldsymbol{\theta})^H\boldsymbol{B}(\boldsymbol{\theta})\right)^{-1}\boldsymbol{B}(\boldsymbol{\theta})^H$$

and

$$\boldsymbol{P}_A(\boldsymbol{\theta}) = \boldsymbol{A}(\boldsymbol{\theta})\left(\boldsymbol{A}(\boldsymbol{\theta})^H\boldsymbol{A}(\boldsymbol{\theta})\right)^{-1}\boldsymbol{A}(\boldsymbol{\theta})^H.$$

The second GLRT detector can also be interpreted as a test of model fitting. If more energy can be projected out from the observations onto the bistatic path subspace than the direct-path subspace, the bistatic reflection model ($\mathcal{H}_1$) can fit the observations better.

## THE THIRD GLRT DETECTOR

The angles $\theta$ can be known a priori as well in some cases, without determining the reflection model in advance. For example, in some implementations, a universal algorithm is used to estimate the angles, without differentiating the reflection models, by exploiting the fact that the set of DOD is the same as the set of DOA. Thus, the third GLRT detector can be written as

$$\mathcal{L}'' = \frac{\max_{S} p_1(\boldsymbol{Y}|\boldsymbol{S})}{\max_{S} p_0(\boldsymbol{Y}|\boldsymbol{S})} = \exp\left\{\frac{\|\boldsymbol{P}_A^{\perp}(\boldsymbol{\theta})\boldsymbol{Y}\|_F^2 - \|\boldsymbol{P}_B^{\perp}(\boldsymbol{\theta})\boldsymbol{Y}\|_F^2}{\eta}\right\} \underset{\mathcal{H}_0}{\overset{\mathcal{H}_1}{\gtrless}} \gamma''.$$

Again, with a little abuse of the notations, the third GLRT detector can be simplified as

$$\mathcal{L}'' = \|\boldsymbol{P}_B(\boldsymbol{\theta})\boldsymbol{Y}\|_F^2 - \|\boldsymbol{P}_A(\boldsymbol{\theta})\boldsymbol{Y}\|_F^2.$$

Comparing with the second GLRT detector, the third GLRT detector does not involve the angle estimation for each model. The third GLRT detector also tests model fitting with known angles.

## THE FOURTH GLRT DETECTOR

Another possible case is that the angles are known but the noise power is unknown (for example, when the estimated noise power is not reliable). This GLRT detector is given by

$$\mathcal{L}''' = \frac{\max_{S,\eta} p_1(\boldsymbol{Y}|\boldsymbol{S},\eta)}{\max_{S,\eta} p_0(\boldsymbol{Y}|\boldsymbol{S},\eta)} \underset{\mathcal{H}_0}{\overset{\mathcal{H}_1}{\gtrless}} \gamma'''.$$

By denoting the MLE results of the unknowns as $\{\hat{S}, \hat{\eta}\}$, the test statistic can be written as

$$\mathcal{L}''' = \frac{\max_{\eta} p_1(\boldsymbol{Y}|\widehat{\boldsymbol{S}},\eta)}{\max_{\eta} p_0(\boldsymbol{Y}|\widehat{\boldsymbol{S}},\eta)} = \frac{\max_{\eta} \frac{1}{(\pi\eta)^{NM}} \exp\left\{-\frac{\|\boldsymbol{P}_B^{\perp}(\boldsymbol{\theta})\boldsymbol{Y}\|_F^2}{\eta}\right\}}{\max_{\eta} \frac{1}{(\pi\eta)^{NM}} \exp\left\{-\frac{\|\boldsymbol{P}_A^{\perp}(\boldsymbol{\theta})\boldsymbol{Y}\|_F^2}{\eta}\right\}} = \left(\frac{\widehat{\eta_0}}{\widehat{\eta_1}}\right)^{MN}$$

where $\widehat{\eta_0} = \dfrac{\left\|\boldsymbol{P}_A^{\perp}(\theta)\boldsymbol{Y}\right\|_F^2}{MN}$ and $\widehat{\eta_1} = \dfrac{\left\|\boldsymbol{P}_B^{\perp}(\theta)\boldsymbol{Y}\right\|_F^2}{MN}$. Similar to the first detector, this detector can be interpreted as comparing the estimated noise power between two hypotheses. When the noise power estimated under $\mathcal{H}_0$ is much larger, $\mathcal{H}_1$ is likely true. In combination with noise power estimates, the fourth GLRT detector is

$$\mathcal{L}''' = \left(\frac{\left\|\boldsymbol{P}_A^{\perp}(\theta)\boldsymbol{Y}\right\|_F^2}{\left\|\boldsymbol{P}_B^{\perp}(\theta)\boldsymbol{Y}\right\|_F^2}\right)^{MN} \text{ or } \mathcal{L}''' = \frac{\left\|\boldsymbol{P}_A^{\perp}(\theta)\boldsymbol{Y}\right\|_F^2}{\left\|\boldsymbol{P}_B^{\perp}(\theta)\boldsymbol{Y}\right\|_F^2}.$$

## ADDITIONAL CONSIDERATIONS

Although the expressions of the above GLRT detectors are different, they can be unified as finding a better model to fit the observations. For example, the second GLRT detector can be related to the first GLRT detector through a monotonically increasing function, such as $\mathcal{L}' = \Delta_1(\mathcal{L} - 1)$.

Following the insights obtained above, extension to other multi-path reflection models can be realized by changing the involved spatial matrices. For example, to differentiate a hybrid reflection model with one direct-path reflection and one bistatic reflection from the direct-path reflection model, $B(\theta)$ can be replaced using $\boldsymbol{C}(\theta) = [\boldsymbol{a}(\theta_1,\theta_1),\boldsymbol{a}(\theta_1,\theta_2)]$. When the contrasting models are not mutually exclusive, the threshold used to make decisions should be adjusted accordingly.

The previously mentioned detectors are binary detectors (in other words, the decision is "true" or "false.") Alternative methods can provide probabilities instead of simple binary analysis. A soft-decision method, based on the GLRT detectors, can be used to render probabilistic feature. The probability of the event that model $\boldsymbol{B}$ is correct is given by

$$\lambda_B = \frac{\max_{\boldsymbol{\theta}}\|\boldsymbol{P}_B(\boldsymbol{\theta})\boldsymbol{Y}\|_F^2}{\max_{\boldsymbol{\theta}}\|\boldsymbol{P}_B(\boldsymbol{\theta})\boldsymbol{Y}\|_F^2 + \max_{\boldsymbol{\theta}}\|\boldsymbol{P}_A(\boldsymbol{\theta})\boldsymbol{Y}\|_F^2}$$

and the probability of the event that model A is correct is given by

$$\lambda_A = \frac{\max_{\boldsymbol{\theta}}\|\boldsymbol{P}_A(\boldsymbol{\theta})\boldsymbol{Y}\|_F^2}{\max_{\boldsymbol{\theta}}\|\boldsymbol{P}_B(\boldsymbol{\theta})\boldsymbol{Y}\|_F^2 + \max_{\boldsymbol{\theta}}\|\boldsymbol{P}_A(\boldsymbol{\theta})\boldsymbol{Y}\|_F^2}.$$

When the angles are known or estimated in advance, the maximization in the above equations can be removed.

**ANGLE ESTIMATION FRAMEWORK**

Sometimes angle (or phase) estimation and bistatic reflection detection cannot be clearly decoupled. For example, in some methods, before making a determination whether there are multi-path reflections, the angle (or phase) estimation must be performed for all the possibilities. Once the determination is made, the corresponding estimates are selected as the final results. In other words, estimation is a prerequisite to bistatic detection, but estimation cannot be finalized until bistatic detection is complete. The first and the second GLRT detectors belong to this category.

Some methods separate bistatic reflection detection from angle or phase estimation. By exploiting the linear prediction (LP) feature of a uniform linear array (ULA) formed through a MIMO radar system, the detection could be done without estimating any angle or phase. Based on the detection results, corresponding estimators are selected to find the angles. If the angles are estimated first via a method applicable to both direct-path and multi-path reflections, and then the third or fourth GLRT detector is used to identify detections with bistatic reflections.

FLOWCHARTS

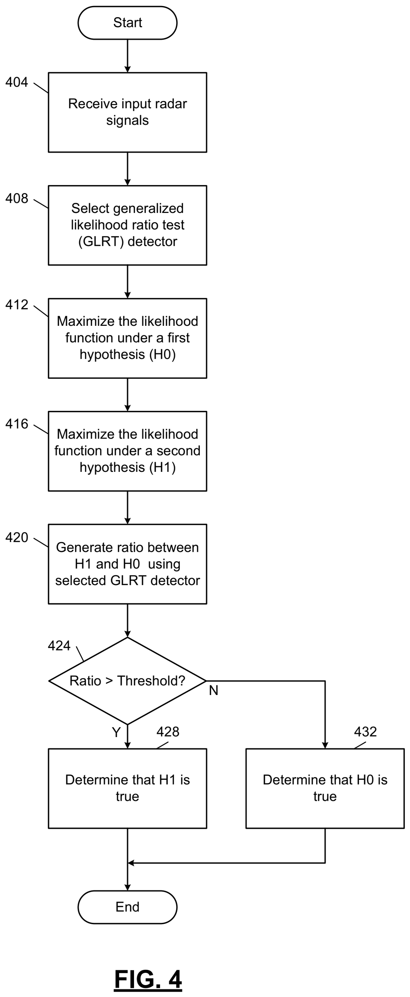

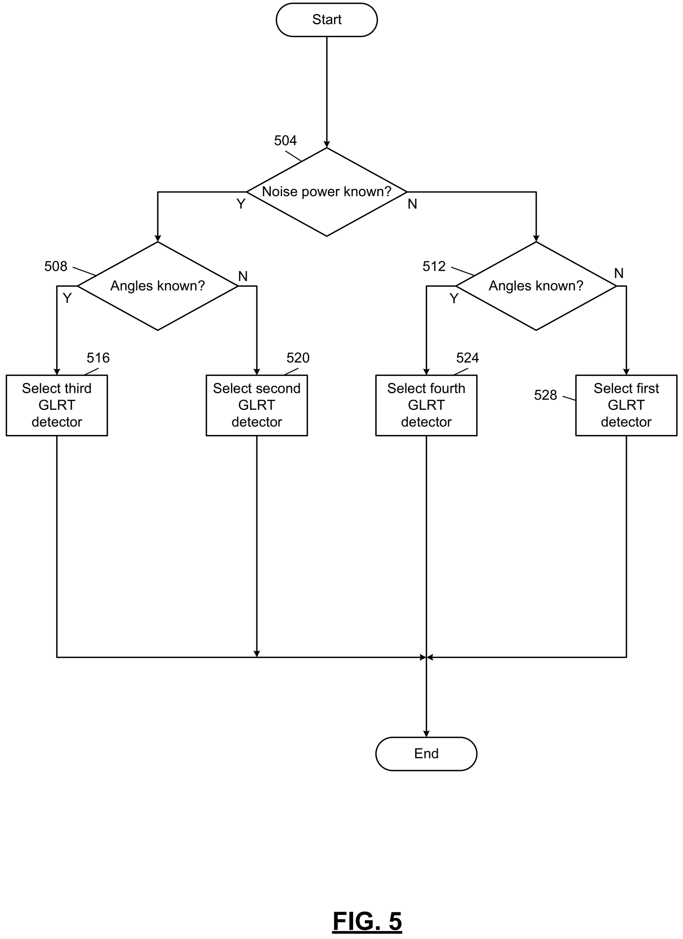

FIG. 4 is a flowchart of an example method for determining whether a signal reflection is monostatic or bistatic. Control begins at 404 after receiving input radar signals. At 408 control selects a generalized likelihood ratio test (GLRT) detector (for example, using the method described with respect to FIG. 5). At 412 control maximizes the likelihood function under a first hypothesis ($\mathcal{H}_0$). At 416 control maximizes the likelihood function under a second hypothesis ($\mathcal{H}_1$). At 420 control generates a ratio between the first hypothesis and the second hypothesis using the selected GLRT detector. At 424, control determines whether the ratio is greater than a specified threshold. In some implementations, the threshold is determined by simulation to produce the most accurate results. If the ratio is greater than the threshold, control transfers to 428 and determines that the second hypothesis ($\mathcal{H}_1$) is true. If the ratio is not greater than the threshold, control transfers to 432 and determines that the first hypothesis ($\mathcal{H}_0$) is true. After 428 or 432, control ends.

In some implementations, after 428 or 432, control performs additional actions instead of ending. For example, if the method described with respect to FIG. 4 is used to determine monostatic or bistatic reflections before angle estimation occurs, control uses the monostatic or bistatic determination to select angle estimation algorithms. As another example, if the method described with respect to FIG. 4 is used after angle estimation occurs, control uses the monostatic or bistatic determination to adjust the angle data (for example, by ignoring ghost targets or adjusting distances to targets). In some implementations, control transmits the monostatic or bistatic determination to another system or a module to adjust angle and/or target data.

FIG. 5 is a flowchart of an example method for selecting a generalized likelihood ratio test (GLRT) detector. Control begins at 504 and determines whether noise power level is known. If noise power is known, control transfers to 508. If noise power is not known, control transfers to 512. At 508, control determines if angles (such as DOA or DOD) are known. If the angles are known, control transfers to 516 and the third GLRT detector is selected. If the angles are not known, control transfers to 520 and the second GLRT detector is selected.

At 512, control determines if angles (such as DOA or DOD) are known. If the angles are known, control transfers to 524 and the fourth GLRT detector is selected. If the angles are not known, control transfers to 528 and the first GLRT detector is selected.

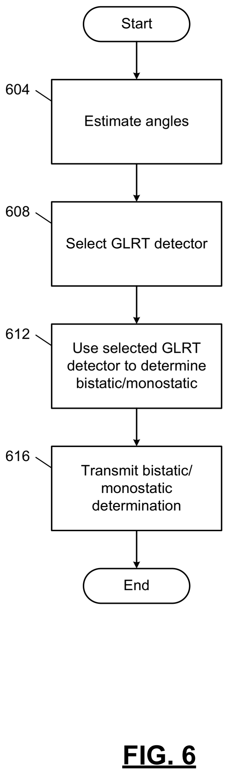

FIG. 6 is a flowchart of an example method for determining angles and whether a signal is bistatic or monostatic. Control begins at 604 and determines the angles (for example via method applicable to both direct-path and multi-path reflections). At 608, control selects a GLRT detector (for example, the third or fourth GLRT detector). At 612, control determines whether monostatic or bistatic reflections are present. At 616, control transmits the monostatic/bistatic determination and control ends.

## CLAUSES

Various example embodiments of the invention are described in the following clauses.

Clause 1: A method comprising:

receiving a set of radar signals incident on a set of objects;
determining a first hypothesis model that represents a monostatic signal model of the set of radar signals;
determining a second hypothesis model that represents a bistatic signal model of the set of radar signals;
selecting, from a set of generalized likelihood ratio test (GLRT) detectors, a selected GLRT detector based on a set of signal criteria;
based on the selected GLRT detector, determining a ratio between a maximized likelihood function of the second hypothesis model and a maximized likelihood function of the first hypothesis model;
determining whether the ratio is greater than a threshold;
determining whether a set of angles associated with the set of radar signals is available;
in response to a determination that the set of angles is available, updating a set of data associated with a set of objects; and
in response to a determination that the set of angles is not available:

selecting an angle estimation method based on the ratio;
estimating the set of angles using the selected angle estimation method; and
tracking the set of objects based on the set of angles.

Clause 2: The method of clause 1 further comprising:

in response to a determination that the ratio is greater than a threshold, determining that the second hypothesis model is accurate; and
in response to a determination that the ratio is less than or equal to the threshold, determining that the first hypothesis model is accurate.

Clause 3: The method of any of clauses 1-2 further comprising autonomously controlling a vehicle to avoid the set of objects.

Clause 4: The method of any of clauses 1-3 wherein selecting the angle estimation method includes:

in response to a determination that the ratio is greater than the threshold, selecting a first angle estimation method; and
in response to a determination that the ratio is less than the threshold, selecting a second angle estimation method.

Clause 5: The method of any of clauses 1-4 wherein the set of GLRT detectors is derived from:

$$\mathcal{L} = \frac{\max\limits_{\boldsymbol{\theta},\boldsymbol{S},\eta} p_1(Y|\boldsymbol{\theta},\boldsymbol{S},\eta)}{\max\limits_{\boldsymbol{\theta},\boldsymbol{S},\eta} p_0(Y|\boldsymbol{\theta},\boldsymbol{S},\eta)} \underset{\mathcal{H}_0}{\overset{\mathcal{H}_1}{\gtrless}} \gamma.$$

Clause 6: The method of any of clauses 1-5 wherein the set of GLRT detectors includes:

a first GLRT detector defined as:

$$\mathcal{L} = \frac{\min_{\theta}\left\|P_A^{\perp}(\theta)Y\right\|_F^2}{\min_{\theta}\left\|P_B^{\perp}(\theta)Y\right\|_F^2},$$

a second GLRT detector defined as:

$$\mathcal{L}' = \max_{\theta}\|P_B(\theta)Y\|_F^2 - \max_{\theta}\|P_A(\theta)Y\|_F^2 \ ,$$

a third GLRT detector defined as:

$$\mathcal{L}'' = \|P_B(\theta)Y\|_F^2 - \|P_A(\theta)Y\|_F^2 \ ,$$

and

a fourth GLRT detector defined as:

$$\mathcal{L}''' = \frac{\left\|P_A^{\perp}(\theta)Y\right\|_F^2}{\left\|P_B^{\perp}(\theta)Y\right\|_F^2} \ .$$

Clause 7: The method of clause 6 wherein:

the selected angle estimation method is applicable to direct-path reflections and multi-path reflections, and

the selected GLRT detector is the third GLRT detector or the fourth GLRT detector.

Clause 8: The method of clause 6 wherein:

the first hypothesis model ($\mathcal{H}_0$) is defined as:

$$Y = A(\theta)S + W,$$

the second hypothesis model ($\mathcal{H}_1$) is defined as:

$$Y = B(\theta)S + W,$$

$Y \in \mathbb{C}^{N \times M}$ is a set of array observations, $A(\theta) \in \mathbb{C}^{N \times K}$ is a first spatial matrix of reflection paths,

$B(\theta) \in \mathbb{C}^{N \times K}$ is a second spatial matrix of reflection paths,

$S \in \mathbb{C}^{K \times M}$ is a set of transmitted signals,

$W \in \mathbb{C}^{N \times M}$ is a set of noise data,

$\theta$ is a set of angle data that includes $K$ quantity of elements,
$N$ is a quantity of radar elements,
$K$ is a quantity of reflection paths,
$M$ is a quantity of observations,
$\eta$ is a power level associated with the set of noise data,
$\gamma$ is a threshold value,
$p_1$ is a likelihood function under the second hypothesis model,
$p_0$ is a likelihood function under the first hypothesis model,
$\|\cdot\|_F$ represents a Frobenius norm,

$P_A$ is a first projection matrix that maps vectors into their projections on to a subspace formed by $A$, where $P_A(\theta) = A(\theta)(A(\theta)^H A(\theta))^{-1} A(\theta)^H$,

$P_B$ is a second projection matrix that maps vectors into their projections on to a subspace formed by $B$, where $P_B(\theta) = B(\theta)(B(\theta)^H B(\theta))^{-1} B(\theta)^H$,

$P_B^\perp(\theta)$ is defined as $P_B^\perp(\theta) = I - P_B(\theta)$, and

$P_A^\perp(\theta)$ is defined as $P_A^\perp(\theta) = I - P_A(\theta)$, where $I$ is an identity matrix.

Clause 9: The method of any of clauses 1-8 further comprising:

determining a probability that the second hypothesis model is correct,
wherein the probability is defined as:

$$\lambda_B = \frac{\max_\theta \|P_B(\theta)Y\|_F^2}{\max_\theta \|P_B(\theta)Y\|_F^2 + \max_\theta \|P_A(\theta)Y\|_F^2}.$$

Clause 10: The method of any of clauses 1-9 further comprising:

determining a probability that the first hypothesis model is correct,
wherein the probability is defined as:

$$\lambda_A = \frac{\max_\theta \|P_A(\theta)Y\|_F^2}{\max_\theta \|P_B(\theta)Y\|_F^2 + \max_\theta \|P_A(\theta)Y\|_F^2}.$$

Clause 11: The method of any of clauses 1-10 wherein:

the first hypothesis model is based on:

a quantity of elements in a radar array that receives the set of radar signals,
a first quantity of reflection paths,
a first quantity of observations,
the set of array observations,
the first spatial matrix of reflection paths,
the set of transmitted signals, and
the set of noise data; and

the second hypothesis model is based on:

the quantity of elements in a radar array that receives the set of radar signals,
a second quantity of reflection paths,
a second quantity of observations,
the set of array observations,
the second spatial matrix of reflection paths,
the set of transmitted signals, and
the set of noise data.

Clause 12: The method of any of clauses 1-11 wherein the set of signal criteria includes:

a first criterion that is met when a power level associated with a set of noise data is known, and
a second criterion that is met when a set of angles associated with a spatial matrix of reflection paths is known.

Clause 13: The method of any of clauses 1-12 wherein the set of angles includes a direction of departure and a direction of arrival.
Clause 14: The method of any of clauses 1-13 further comprising:

before determining whether the ratio is greater than the threshold, estimating the set of angles; and
based on the ratio, identify a set of objects associated with bistatic reflections.

Clause 15: A system comprising:

memory hardware configured to store instructions;
processor hardware configured to execute the instructions, wherein the instructions execute the method of any of
clauses 1-14.

## CONCLUSION

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR. The foregoing description is merely illustrative in nature and is in no way intended to limit the disclosure, its application, or uses.

The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Java-Script®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

**Claims**

1. A method comprising:

   receiving a set of radar signals incident on a set of objects;
   determining a first hypothesis model that represents a monostatic signal model of the set of radar signals;
   determining a second hypothesis model that represents a bistatic signal model of the set of radar signals;
   selecting, from a set of generalized likelihood ratio test (GLRT) detectors, a selected GLRT detector based on a set of signal criteria;
   based on the selected GLRT detector, determining a ratio between a maximized likelihood function of the second hypothesis model and a maximized likelihood function of the first hypothesis model;
   determining whether the ratio is greater than a threshold;
   determining whether a set of angles associated with the set of radar signals is available;
   in response to a determination that the set of angles is available, updating a set of data associated with a set of objects; and
   in response to a determination that the set of angles is not available:

      selecting an angle estimation method based on the ratio;
      estimating the set of angles using the selected angle estimation method; and
      tracking the set of objects based on the set of angles.

2. The method of claim 1 further comprising:

   in response to a determination that the ratio is greater than a threshold, determining that the second hypothesis model is accurate; and
   in response to a determination that the ratio is less than or equal to the threshold, determining that the first hypothesis model is accurate.

3. The method of claim 1 or claim 2, further comprising autonomously controlling a vehicle to avoid the set of objects.

4. The method of any one of the preceding claims, wherein selecting the angle estimation method includes:

   in response to a determination that the ratio is greater than the threshold, selecting a first angle estimation method; and
   in response to a determination that the ratio is less than the threshold, selecting a second angle estimation method.

5. The method of any one of the preceding claims, wherein the set of GLRT detectors is derived from:

$$\mathcal{L} = \frac{\max_{\theta,S,\eta} p_1(Y|\theta,S,\eta)}{\max_{\theta,S,\eta} p_0(Y|\theta,S,\eta)} \overset{\mathcal{H}_1}{\underset{\mathcal{H}_0}{\gtrless}} \gamma.$$

6. The method of claim 5 wherein the set of GLRT detectors includes:

a first GLRT detector defined as:

$$\mathcal{L} = \frac{\min_{\theta}\|P_A^{\perp}(\theta)Y\|_F^2}{\min_{\theta}\|P_B^{\perp}(\theta)Y\|_F^2},$$

a second GLRT detector defined as:

$$\mathcal{L}' = \max_{\theta}\|P_B(\theta)Y\|_F^2 - \max_{\theta}\|P_A(\theta)Y\|_F^2,$$

a third GLRT detector defined as:

$$\mathcal{L}'' = \|P_B(\theta)Y\|_F^2 - \|P_A(\theta)Y\|_F^2,$$

and
a fourth GLRT detector defined as:

$$\mathcal{L}''' = \frac{\|P_A^{\perp}(\theta)Y\|_F^2}{\|P_B^{\perp}(\theta)Y\|_F^2}.$$

7. The method of claim 6 wherein:

the selected angle estimation method is applicable to direct-path reflections and multi-path reflections, and the selected GLRT detector is the third GLRT detector or the fourth GLRT detector.

8. The method of claim 6 or claim 7, wherein:

the first hypothesis model ($\mathcal{H}_0$) is defined as:

$$Y = A(\theta)S + W,$$

the second hypothesis model ($\mathcal{H}_1$) is defined as:

$$Y = B(\theta)S + W,$$

$Y \in \mathbb{C}^{N \times M}$ is a set of array observations,

$A(\theta) \in \mathbb{C}^{N \times K}$ is a first spatial matrix of reflection paths,

$B(\theta) \in \mathbb{C}^{N \times K}$ is a second spatial matrix of reflection paths,

$S \in \mathbb{C}^{K \times M}$ is a set of transmitted signals,

$W \in \mathbb{C}^{N \times M}$ is a set of noise data,

$\theta$ is a set of angle data that includes K quantity of elements,

$N$ is a quantity of radar elements,

$K$ is a quantity of reflection paths,

M is a quantity of observations,

$\eta$ is a power level associated with the set of noise data,

$\gamma$ is a threshold value,

$p_1$ is a likelihood function under the second hypothesis model,

$p_0$ is a likelihood function under the first hypothesis model,

$\|\cdot\|_F$ represents a Frobenius norm,

$\boldsymbol{P_A}$ is a first projection matrix that maps vectors into their projections on to a subspace formed by $\boldsymbol{A}$, where $P_A(\theta) = \boldsymbol{A}(\theta)(\boldsymbol{A}(\theta)^H\boldsymbol{A}(\theta))^{-1}\boldsymbol{A}(\theta)^H$,

$P_B$ is a second projection matrix that maps vectors into their projections on to a subspace formed by $\boldsymbol{B}$, where $\boldsymbol{P_B}(\theta) = \boldsymbol{B}(\theta)(\boldsymbol{B}(\theta)^H\boldsymbol{B}(\theta))^{-1}\boldsymbol{B}(\theta)^H$,

$\boldsymbol{P_B^{\perp}(\theta)}$ is defined as $\boldsymbol{P_B^{\perp}(\theta) = I - P_B(\theta)}$, and

$\boldsymbol{P_A^{\perp}(\theta)}$ is defined as $\boldsymbol{P_A^{\perp}(\theta) = I - P_A(\theta)}$, where I is an identity matrix.

9. The method of claim 8 further comprising:

determining a probability that the second hypothesis model is correct,
wherein the probability is defined as:

$$\lambda_B = \frac{\max_{\theta}\|\boldsymbol{P_B}(\boldsymbol{\theta})\boldsymbol{Y}\|_F^2}{\max_{\theta}\|\boldsymbol{P_B}(\boldsymbol{\theta})\boldsymbol{Y}\|_F^2 + \max_{\theta}\|\boldsymbol{P_A}(\boldsymbol{\theta})\boldsymbol{Y}\|_F^2},$$

or,

determining a probability that the first hypothesis model is correct,
wherein the probability is defined as:

$$\lambda_A = \frac{\max_{\theta}\|\boldsymbol{P_A}(\boldsymbol{\theta})\boldsymbol{Y}\|_F^2}{\max_{\theta}\|\boldsymbol{P_B}(\boldsymbol{\theta})\boldsymbol{Y}\|_F^2 + \max_{\theta}\|\boldsymbol{P_A}(\boldsymbol{\theta})\boldsymbol{Y}\|_F^2}.$$

10. The method of claim 8 or claim 9, wherein the first hypothesis model is based on:

a quantity of elements in a radar array that receives the set of radar signals,
a first quantity of reflection paths,
a first quantity of observations,
the set of array observations,
the first spatial matrix of reflection paths,
the set of transmitted signals, and
the set of noise data.

11. The method of claim 10, wherein the second hypothesis model is based on:

the quantity of elements in a radar array that receives the set of radar signals,
a second quantity of reflection paths,
a second quantity of observations,
the set of array observations,
the second spatial matrix of reflection paths,
the set of transmitted signals, and
the set of noise data.

12. The method of any one of the preceding claims, wherein the set of signal criteria includes:

a first criterion that is met when a power level associated with a set of noise data is known, and
a second criterion that is met when a set of angles associated with a spatial matrix of reflection paths is known.

13. The method of any one of the preceding claims, wherein the set of angles includes a direction of departure and a direction of arrival.

14. The method of any one of the preceding claims, further comprising:

   before determining whether the ratio is greater than the threshold, estimating the set of angles; and
   based on the ratio, identify a set of objects associated with bistatic reflections.

15. A system comprising:

   memory hardware configured to store instructions;
   processor hardware configured to execute the instructions, wherein the instructions, when executed, are arranged to cause the method of any one of claims 1 to 14 to be performed.

Radar System

112

108

Radar System 108

Antenna Array 136

Transceiver 140

Processor Hardware 144

Memory Hardware 148

Radar Software
152

# FIG. 1

**FIG. 2**

Monostatic direct path reflection
(DOD = DOA)

**FIG. 3A**

Asymmetric bistatic reflection path 1
(DOD ≠ DOA)

**FIG. 3B**

Target
(312c)

$r_2$

$r_1$

$r_3$

Host
Radar
(304)

308 (reflective surface)

Asymmetric bistatic reflection path 2
(DOD ≠ DOA)

**FIG. 3C**

Target
(312d)

$r_2$

$r_3$

Host
Radar
(304)

308 (reflective surface)

Monostatic multipath reflection
(DOD = DOA)

**FIG. 3D**

EP 4 737 941 A1

```
                    ┌──────────┐
                    │  Start   │
                    └────┬─────┘
                         │
                         ▼
  404          ┌─────────────────────┐
               │  Receive input radar │
               │      signals         │
               └──────────┬──────────┘
                          │
                          ▼
  408          ┌─────────────────────┐
               │ Select generalized  │
               │ likelihood ratio test│
               │   (GLRT) detector    │
               └──────────┬──────────┘
                          │
                          ▼
  412          ┌─────────────────────┐
               │ Maximize the likelihood│
               │ function under a first │
               │   hypothesis (H0)     │
               └──────────┬──────────┘
                          │
                          ▼
  416          ┌─────────────────────┐
               │ Maximize the likelihood│
               │ function under a second│
               │   hypothesis (H1)     │
               └──────────┬──────────┘
                          │
                          ▼
  420          ┌─────────────────────┐
               │ Generate ratio between│
               │   H1 and H0  using    │
               │ selected GLRT detector│
               └──────────┬──────────┘
                          │
                          ▼
  424              ◇ Ratio > Threshold? ◇ ──N──┐
                          │                      │
                          Y                      │
                          │                      ▼
  428          ┌─────────────────┐   432 ┌─────────────────┐
               │ Determine that H1 is│     │ Determine that H0 is│
               │      true        │      │      true        │
               └────────┬─────────┘      └────────┬─────────┘
                        │                         │
                        └───────────┬─────────────┘
                                    ▼
                              ┌──────────┐
                              │   End    │
                              └──────────┘
```

**FIG. 4**

24

**FIG. 5**

Start

604 — Estimate angles

608 — Select GLRT detector

612 — Use selected GLRT detector to determine bistatic/monostatic

616 — Transmit bistatic/ monostatic determination

End

**FIG. 6**

Europäisches
Patentamt

European
Patent Office

Office européen
des brevets

# EUROPEAN SEARCH REPORT

**Application Number**

EP 25 20 9932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LE ZHENG ET AL: "Detection of Ghost Targets for Automotive Radar in the Presence of Multipath", ARXIV.ORG, CORNELL UNIVERSITY LIBRARY, 201 OLIN LIBRARY CORNELL UNIVERSITY ITHACA, NY 14853, 15 July 2024 (2024-07-15), XP091817886, DOI: 10.1109/TSP.2024.3384750 * page 3, column 1 - column 2; page 4, column 1; page 6, column 1; equations (4), (5) (6), (9); figures 1(a), 1(b) * | 1-15 | INV. G01S7/41 G01S13/42 G01S13/931 |
| X | ENGELS FLORIAN ET AL: "Automotive MIMO radar angle estimation in the presence of multipath", 2017 EUROPEAN RADAR CONFERENCE (EURAD), EUROPEAN MICROWAVE ASSOCIATION, 11 October 2017 (2017-10-11), pages 82-85, XP033292791, DOI: 10.23919/EURAD.2017.8249152 [retrieved on 2018-01-05] * abstract; figure 1 * | 1,15 | |
| X | LONG JIAMIN ET AL: "Localization with Monostatic ISAC System: LOS Detection and Parameter Estimation", 2024 IEEE RADAR CONFERENCE (RADARCONF24), IEEE, 6 May 2024 (2024-05-06), pages 1-6, XP034618255, DOI: 10.1109/RADARCONF2458775.2024.10548681 [retrieved on 2024-06-13] * page 4 * | 1,15 | |

**TECHNICAL FIELDS SEARCHED (IPC)**

G01S

The present search report has been drawn up for all claims

| Place of search | Date of completion of the search | Examiner |
|---|---|---|
| Munich | 6 March 2026 | Kirscher, Jérôme |

EPO FORM 1503 03.82 (P04C01)